# EUROPEAN PATENT APPLICATION

(11) **EP 2 479 048 A1**
(43) Date of publication of application: **25.07.2012**
(21) Application number: 12151877.3
(22) Date of filing: 20.01.2012
(51) Int. Cl.: B60H 3/00

(54) **Air conditioning system**

(30) Priority: 20.01.2011 IT TO20110040
(71) Applicant: Logos S.r.l., 43122 Parma (IT)
(72) Inventor: Dell'cqua, Lucio, 43122 Parma (IT); Ferri, Giorgio, 43122 PARMA (IT)
(74) Representative: Di Gennaro, Sergio

(57) **Abstract**

An air conditioning system 2 comprising: at least one piping circuit 20, inside which a predetermined gas flows; at least one compressor 21; at least one condenser 22; at least one pressure changing organ 23; at least one evaporator 24; at least one sanitization device 3, adapted to sanitize the air conditioning system 2 by means of at least one disinfectant substance "S" and is permanently built-in in system 2 itself.

## Description

The present invention describes an air conditioning system comprising a sanitization device, so as to disinfect said system from molds, bacteria and microorganisms in general, which develop in said systems.

It is known that said microorganisms mentioned above are bad for the human body, since they can cause allergies or infections and irritations of the respiratory tract.

The air conditioner is a device that uses the ability of gases to warm or cool when subject to physical stresses.

In principle, the air conditioner consists of: at least one piping circuit, inside which it flows a given gas ; at least one compressor, at least one condenser; at least one expansion valve and an evaporator, which are properly connected, so to obtain the air conditioning.

The gases used in said air conditioning systems are heat transfer fluids, which are chemically synthesized and whose mixture is optimized for the function they have to fulfill.

The compressor is adapted to generate a given pressure inside the piping circuit.

Said pressure pushes the gas inside the circuit, thus causing it to follow a path that comprises flowing through the condenser towards the expansion valve.

During said path, the gas is forced to flow through narrow and winding ducts.

While flowing through said portion of the piping circuit, the gas overheats, thus reaching a given temperature as a function of the twists and turns and of the pressure inside the circuit.

After having flown through the expansion valve, the gas, which is kept under pressure by the compressor, is subject to a lamination due to an increase in the section of the pipes of the evaporator.

During the lamination, the temperature of the gas drastically drops, until it reaches a value below 0°C.

The gas that has reached this point is sucked by the compressor for a new air conditioning cycle.

From air conditioner to temperature control system the step is short. An air conditioner is a device which is only able to cool the air, whereas a temperature control system can both cool and heat the air as a function of the temperature desired by the user.

It is common use to install said air conditioning system in every room or closed environment open to public access, such as, for example, supermarkets or buildings.

Typically, an air conditioning system for closed environments, for example houses, consists of an inner unit and of an outer unit.

The outer unit, which comprises a compressor, a condenser, and a lamination organ consisting of a capillary tube, is normally arranged outside of the building.

The inner unit, which is arranged inside the building, comprises the evaporator and a ventilation device, adapted to cool/dehumidify the environment.

Air conditioning systems, furthermore, are used in the automotive field to dehumidify and cool the passenger compartment of a car.

Nowadays, every means of transport with a motor, both motor vehicles and watercrafts comprising a passenger compartment, is provided with an air conditioning system, adapted to cool/dehumidify said passenger compartment.

Normally, the condenser is arranged close to the cooling radiator of the motor of the vehicle and is adapted to get rid of the excess heat of the compressed gas.

The evaporator is adapted to take away heat from the air directed towards the passenger compartment by means of the cooling of the gas caused by the lamination.

Normally, the evaporator is arranged at the beginning of the ventilation system, downstream of the pollen filter and of the ventilation device.

The air that flows through the evaporator cools down by transferring part of its heat to the evaporator itself, thus preventing the gas contained inside the pipes from freezing.

Besides a heat exchange, a physical phenomenon of dehumidification occurs, as well; indeed, the air flowing through the evaporator is subject to a reduction of its amount of water vapor, since part of the humidity of the air condenses close to the evaporator.

The dehumidification contributes to the decrease of the air temperature, since part of the thermal energy owned by the air is used for the condensation of the water vapor contained in the air on a cold surface.

Said air enters the passenger compartment of the car both with a reduced temperature, for the reasons mentioned above, and with a low degree of humidity, which causes the user seating in the passenger compartment to feel a pleasant sensation of freshness.

In said environment with a reduced amount of water vapor in the air, the body of the user can, in turn, introduce water vapor into the environment due to sweating, with the consequent sensation of freshness.

Said transfer of water vapor from the human body to the surrounding environment requires an amount of energy that is taken away from the body temperature of the user himself/herself, who perceives a sensation of freshness.

A temperature control system consists of a plurality of devices, each of which is characterized by a specific technology.

The steps described above with reference to an air conditioning system are known to a skilled person, since they are part of the vapor-compression refrigeration cycle.

In order to obtain the air control effect, the air flow, which is cooled by the evaporator, is caused to pass through the pre-existing radiator of the heating system of the vehicle.

This solution creates the opportunity to heat the air again, after having reduced its humidity rate by means of the air conditioner.

The management of the air heating and conditioning can be optimized, in terms of efficiency of the heat exchange and of reduction of the space taken up, with compact modules, such as for example the so-called "Heating Ventilating and Air Conditioning", also known as HVAC, which comprise the evaporator, the heater and the necessary electric fans.

In all air conditioning systems, the lower temperature of the surface of the evaporator leads to the condensation of the humidity contained in the air, thus forming water drops, which remain trapped between the fins of the evaporator.

The presence of water, together with the presence of impurities in the evaporator, are favorable conditions that contribute to the proliferation and development of bacteria, algae, fungi, and microorganisms, which are bad for the human body, in the ducts and, above all, in the evaporator.

Said microorganisms are responsible for the bad smell that can be perceived when turning on and/or off the air conditioning system.

As a matter of fact, when the air conditioner is turned on, bacteria, molds, microbes, etc. are pushed from the ventilation circuit into the environment and can be inhaled by the user, thus provoking: eye and throat irritations; bacteria infections of the respiratory tract; allergic reactions, as well as the above-mentioned bad smells.

Normally, the methods for cleaning and disinfecting the air conditioning systems implemented in vehicles substantially are of five different types, four of these types performing the sanitization by means of disinfectants in liquid phase.

The first method tries to wet the evaporator from the outside, by means of a hydraulic pump or a compressor, with a disinfectant liquid.

The second method tries to reach the evaporator from the outside by applying a disinfectant liquid in the form of vapor.

In order to turn the disinfectant liquid into vapor, said disinfectant is heated, thus becoming vapor.

For both methods, the drops produced have the feature of being very heavy, since they have relatively big sizes, up to different millimeters.

Said drops, due both to the method and to the temperature, are not suited to reach and treat the entire surface of the walls and fins of the evaporator; as a matter of fact, said drops tend to settle along the aeration system and to stop along the path, thus not reaching all the corners of the evaporator.

Those portions of the evaporator that the disinfectant substance can hardly reach are the areas where said molds and microorganisms are most likely to proliferate.

In order to reach all the parts of the system, even the less accessible ones, such as the evaporator, it is necessary to carry out disassembly operations of the system.

Hence, the above-mentioned methods are not effective in terms of disinfection and, furthermore, are expensive in terms of costs, since they require the intervention of operators in order to disassemble the evaporator in its parts.

The second method, furthermore, needs at least one heating means for vaporizing the disinfectant liquid.

The third method uses a disinfectant liquid, which is normally nebulized by using spray cans.

Even in this case, the particles of the nebulized liquid are heavy and, therefore, cause a quick deposition along the path.

Hence, said third method presents the same drawbacks of the methods mentioned above.

In the fourth method, the disinfectant liquid is diffused on the evaporator by means of ultrasonic nebulization.

The ultrasonic nebulization device is normally an electronic circuit, adapted to convert an alternating electric signal, with a predetermined frequency normally around 2 MHz, into a mechanical oscillation by means of an ultrasonic or piezoelectric transducer.

Said method creates an instantaneous nebulization at room temperature of the liquid, which is arranged above the ultrasonic transducer itself.

Subsequently, the nebulized liquid is conveyed, normally by means of a fan, to an orientable outlet pipe and, then, it is sucked by the recirculation system of the temperature control system of the vehicle to be sanitized.

Said method uses nebulized liquid particles at room temperature, thus avoiding the condensation phenomenon.

When using said method, the nebulized disinfectant product does not easily settle on the surfaces of the aeration system of the vehicle, which it encounters along its path.

The particles, which have been nebulized with the method described above, present a size smaller than 5 microns and, therefore, are sufficiently light to deeply penetrate the system, thus disinfecting all the surfaces of the evaporator.

The nebulization device is usually arranged inside the passenger compartment of the vehicle, close to the intake vent of the air recirculation.

Though, this method presents the drawback that the disinfection treatment has to be performed in a motor car repair shop, since the equipment used is for professional use only.

The fourth method uses a gas, normally ozone, as disinfectant substance.

Ozone, whose empirical formula is O₃, is a molecular compound, which is normally found in the gaseous state and whose molecules are made up of three oxygen atoms.

Said gas is naturally present in the high layers of the atmosphere and is obtained starting from oxygen molecules O₂ close to electric discharges, sparks and lightnings.

Said gas has an extremely reactive molecule and is an energetic oxidizer.

Normally, ozone is generated by means of devices called ozonizers, which convert the oxygen of the air into ozone at the moment of the use, since, as mentioned above, ozone presents an unstable molecule and, therefore, is prone to rapidly decompose under normal room conditions.

The oxidizing effect of ozone presents a remarkable bactericide, fungicide and virus-inactivating effect and, for this reason, it is mainly used for the sterilization of air and water as well as for the elimination of bad smells in closed environments.

In the automotive industry, said device is used for sanitization purposes and for the elimination of bad smells from the passenger compartment and from the air circuit.

Though, this method presents two drawbacks: the disinfection treatment has be performed in a motor car repair shop, since the equipment used is for professional use only; ozone is highly unstable and, therefore, it is prone to rapidly decompose above all as temperature increases, thus making it hard for this gas to reach the evaporator with the concentration needed to perform an effective disinfection.

The object of the presents invention is to provide an air conditioning system comprising, in a permanent manner, a sanitization device, adapted to sanitize said system.

One aspect of the present invention is relative to an air conditioning system having the features set forth in appended claim 1.

Further accessory features are set forth in the appended dependent claims.

The additional features and advantages of said air conditioning system will be best understood upon perusal of the following detailed description of a specific embodiment with reference to the accompanying drawings, which specifically illustrate what follows:
- figure 1 shows an example of an air conditioning system applied to a motor vehicle;
- figures 2A and 2B show two embodiments of the sanitization device according to the present invention, which uses the ultrasonic nebulizer of the disinfectant liquid;
- figures 3A and 3B show two embodiments of the sanitization device according to the presents, which uses ozonizer devices;
- figures 4A and 4B show the components of an air conditioning system for public and private environments; in particular, figure 4A shows the inner unit, to which the sanitization device is applied, and figure 4B shows the outer unit;
- figure 5 illustrates the flowchart of the connections between the oscillator and the transducer of the system according to the present invention.

With reference to the figures mentioned above, air conditioning system 2 comprises at least one piping circuit 20, inside which it flows a predetermined gas, such as, for example, a heat transfer gas or an equivalent cooling gas, adapted for the refrigeration cycle; at least one compressor 21; at least one condenser 22; at least one pressure changing organ 23; at least one evaporator 24; and at least one dehydration filter 25; air conditioning system 2 comprising, furthermore, at least one sanitization device 3, adapted to sanitize air conditioning system 2 and is permanently built-in in system 2 itself.

Said sanitization device 3, which is built-in in air conditioning system 2, is preferably arranged close to evaporator 24 in a stable and definitive manner.

Said sanitization device 3 is preferably activated at regular intervals, which are determined, for example, by a central control unit, or it is manually activated.

Said sanitization device 3 comprises at least one diffuser 31, adapted to at least diffuse substance "S" on the surface of evaporator 24.

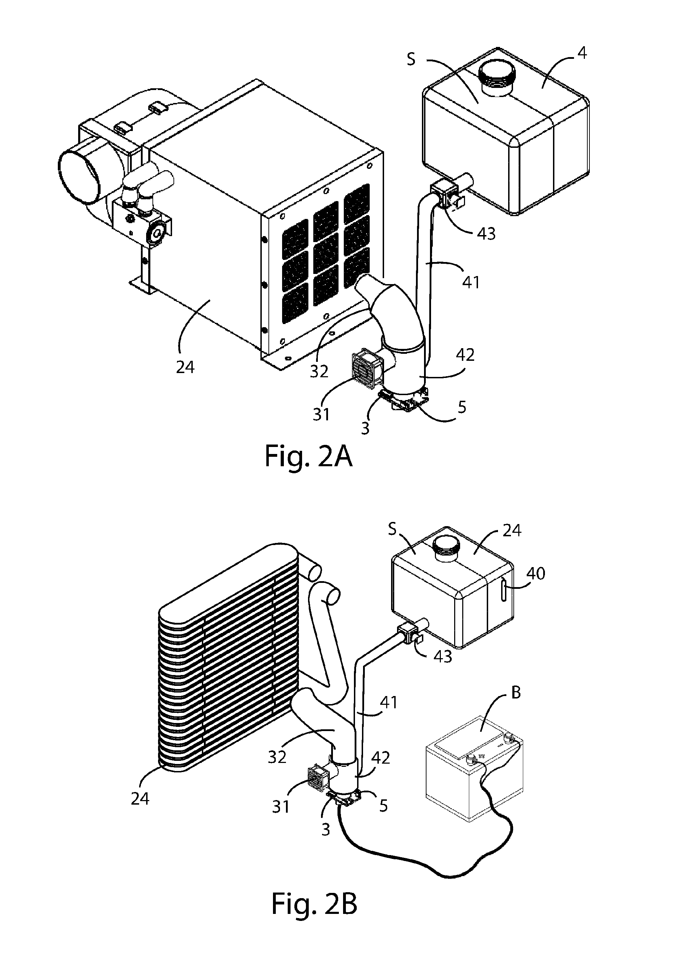

The first embodiment of said sanitization device 3, which is shown in figure 2, comprises a sanitization device 3, which is preferably manufactured with a nebulization technology.

Said sanitization device 3 is preferably built-in in an air conditioning system 2 applied on a vehicle.

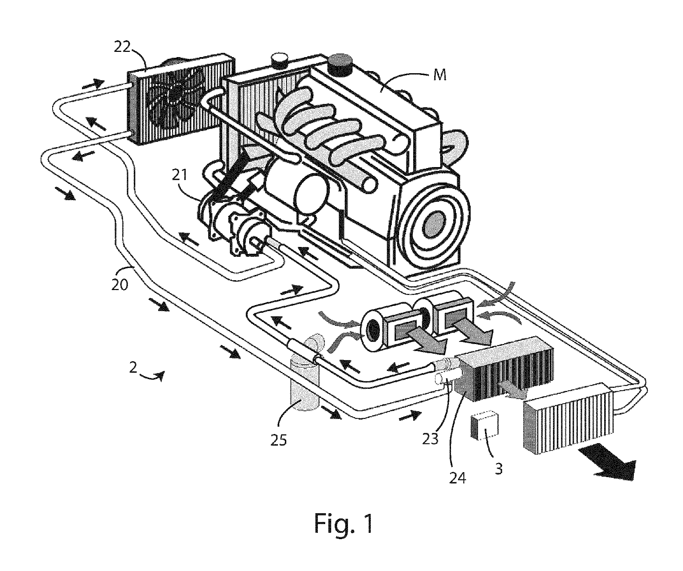

As shown in figure 1, air conditioning system 2 is arranged in the engine compartment close to engine M of the vehicle.

Sanitization device 3, in the present explanatory and non-limiting embodiment, is preferably an ultrasonic nebulizer, which is supplied with power, for example, by means of at least one battery "B" comprised in the vehicle.

Said sanitization device 3 is fitted to the structure of the vehicle, where air conditioning system 2 is installed.

Sanitization device 3 comprises, furthermore, at least one storing tank 4, adapted to hold disinfectant substance "S", preferably in liquid phase, comprising, for example, quaternary ammonium cations.

Said disinfectant "S" is refilled inside storing tank 4 when necessary, as it normally happens for all the other liquids of the vehicle, such as, for example, water and engine oil.

Preferably, said tank 4 comprises a level detecting device 40, which signals the absence of said disinfectant "S" to the central control unit.

When the minimum level of substance "S" is reached, detecting device 40 indicates this event, for example, to the central control unit.

Subsequent to this event, sanitization device 3 is disabled, until the level of disinfectant substance "S" is higher than the above-mentioned minimum level again.

Disinfectant "S" is conveyed, preferably by means of at least one feeding pipe 41, from storing tank 4 to a nebulization container 42.

Said nebulization container 42 is adapted to contain at least one dose of substance "S", which is sufficient for the correct operation of nebulization device 3.

Said quantity of substance "S" has to be at least such as to allow the diffusion of disinfectant substance "S" on the entire surface of evaporator 24.

The flow of disinfectant substance "S" from tank 4 towards container 42 is regulated by means of at least one regulating device 43, for example a solenoid valve.

Sanitization device 3 comprises, furthermore, at least one control device 5, which is preferably electronically implemented and is adapted to control sanitization device 3 and the devices contained therein, such as, for example, regulating device 43.

Said control device 5, as mentioned above, is adapted to control and handle the different devices comprised in sanitization device 3 by communicating with the central control unit.

Level detecting device 40, in an alternative embodiment, is adapted to detect the level of disinfectant substance "S" contained in nebulization container 42.

In case the level of substance "S" is insufficient or below a predetermined minimum level, level detecting device 40 sends a signal, preferably an electric signal, to control device 5, which disables the operation of sanitization device 3, until the level of substance "S" is sufficient to perform at least one nebulization.

In the present embodiment, diffuser 31 is implemented by means of at least one ventilation device, adapted to fan nebulized disinfectant substance "S" towards evaporator 24.

Sanitization device 3 comprises, furthermore, at least one outlet duct 32, which is properly shaped so as to allow the sole outlet of the drops of disinfectant substance "S" with reduced sizes, preferably smaller than five micrometers.

Said outlet duct 32, in an explanatory and non-limiting embodiment shown in figure 2A, comprises: at least one first curved portion 32a, which is manufactured with a curvature angle that is preferably higher than 90°, and at least one second tapered portion 32b with a profile that is, for example, exponentially decreasing; said portions being connected to each other.

In the embodiment shown in figure 2B, outlet duct 32 is substantially S-shaped, so as to facilitate the sole outlet of the drops of disinfectant substance "S" with reduced sizes, preferably smaller than five micrometers.

In the present embodiment, control device 5 comprises at least one power oscillator 51 with a predetermined resonance frequency preferably around 2 MHz.

Said oscillator 51, which, for example, is electronic, converts the direct voltage, preferably coming from the battery "B", into an electronic signal with an adequate level of active power and a predetermined oscillation frequency.

Said oscillator 51, for example of the electronic type, can be a wave generator, for example, a generator of sinusoidal waves, triangle waves, square waves, sawtooth waves, etc.

The different waveforms mentioned above, which can be generated by said oscillator 51, are all equally adapted to obtain an electric signal with the power and frequency features needed for the correct operation of sanitization device 3.

The signal generated by oscillator 51 is sent to at least one piezoelectric or ultrasonic transducer 52, adapted to convert the electronic signal coming from oscillator 51 into a mechanical oscillation.

Said transducer 52 is preferably manufactured by means of a ceramic transducer or an equivalent transducer, adapted to convert an electronic signal at a given frequency into a mechanical oscillation with a frequency that, at the most, is equal to the frequency of the electric signal.

The oscillation of transducer 52 causes disinfectant substance "S" contained in nebulization container 42 to be nebulized.

Said nebulized substance "S" is caused to flow along outlet duct 32 by means of diffuser 32.

The combination of diffuser 31 and of outlet duct 32 allows nebulized substance "S" to be sent towards evaporator 24 in the form of a rain of drops with reduced sizes, for example around five nanometers.

Said rain of substance "S", adapted to reach each part of evaporator 24, disinfects said evaporator 24 from the infesting parasites mentioned above.

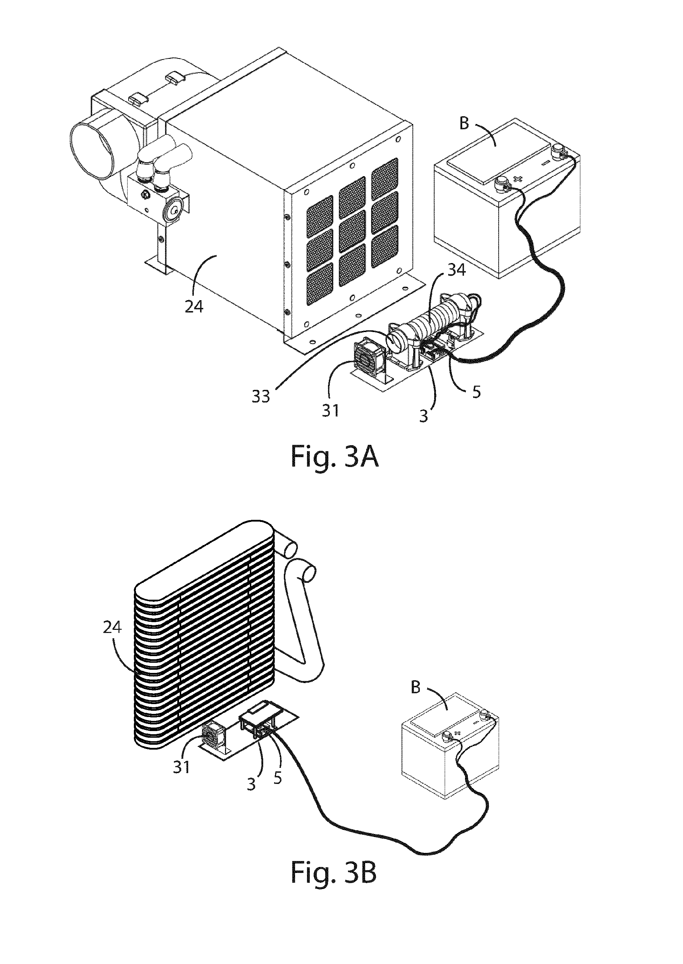

In the second embodiment, which is shown in figures 3A and 3B, sanitization device 3 is manufactured with the ozonation technology.

In this technology, disinfectant substance "S" is ozone O₃, which is produced by sanitization device 3 itself.

In the present embodiment, sanitization device 3 comprises an ozone generator or ozonizer, which preferably uses two technologies: crown effect and UV light.

Said ozone generator is preferably manufactured by using the crown effect technology, as shown in figures 3A and 3B.

In the embodiment shown in figure 3A, the ozone generator comprises: a pipe 33 made of an insulating material, preferably with a cylindrical shape, which is made of quartz or of glass, around which at least one coil 34 is wound preferably by means of at least one electrically conductor cable.

A signal at a frequency in the frequency band preferably ranging from 11 kHz to 18 kHz is applied to at least one end of said coil 34.

Said signal is generated by at least one power oscillator 51, which is supplied with a voltage, preferably in the direct mode, for example by battery "B" of the vehicle.

The voltage generated by power oscillator 51 preferably ranges from 3 kW and 4 kW.

Said oscillator 51, with at least one predetermined resonance frequency, generates, at the outlet, an electric signal with a predetermined frequency.

The signal of power oscillator 51 applied to the coil/winding of transducer 52 generates an electromagnetic field.

The electromagnetic field produced in this way must have a potential gradient sufficient to generate the air ionization.

Said air ionization is known as crown effect.

In the embodiment shown in figure 3B, the ozone generator comprises: at least one insulating plate 35, preferably made of ceramic, which is interposed between two electrodes.

A signal at a frequency in the frequency band preferably ranging from 11 kHz to 18 kHz is applied to said electrodes.

Said signal, which is applied to the electrodes, is generated by at least one power oscillator 51, which is supplied with a voltage, preferably in the direct mode, for example by battery "B" of the vehicle.

The voltage generated by power oscillator 51 is preferably lower than 1 kW.

By means of said ozone generator, some stable oxygen molecules are split, thus forming two oxygen radicals, which can combine with other oxygen molecules, thus generating the ozone gas.

Thanks to a ventilation device comprised in diffuser 31, an avalanche reaction is triggered thanks to the contribution of an air flow.

Said method allows the generation of ozone in a cost-efficient manner both in terms of energy and in terms of logistics.

Said ozone, which has been generated as described above, expands from the spot in which it is automatically generated, thus diffusing on evaporator 24.

The diffusion of the gas causes said gas to reach each part of evaporator 24, thus disinfecting it.

The management of oscillator 51 and of diffuser 31 is carried out by means of at least one control device 5, which handles both the level of power and the activation of oscillator 51.

Said control device 5, furthermore, controls the air flow generated by diffuser 31 for the production of the ozone gas.

For both types of sanitization device 3 described above, it is appropriate to also implement methods for the prevention and the reduction of electromagnetic disturbances, in the light of the presence of signals with high power and high frequency.

Said protection methods are adapted to cause said sanitization device 3 to respect the regulations concerning the electromagnetic compatibility, both in therms of disturbances produced by device 3 itself and in terms of susceptibility to the disturbances coming from the outside.

The embodiments described herein are applied to vehicles and are preferably supplied with power by means of battery "B" of the vehicle. This condition makes it appropriate for sanitization device 3, and in particular for control device 5, to reduce the energy consumption of device 3 itself.

Furthermore, in case said sanitization device 3 is applied on a vehicle, control device 5 is able to communicate with the central control system arranged on the vehicle itself, so that the sanitization device can be properly controlled.

The double control, performed both by control device 5 and by the central control system of the vehicle, is able to minimize the wastes of power and of disinfecting product.

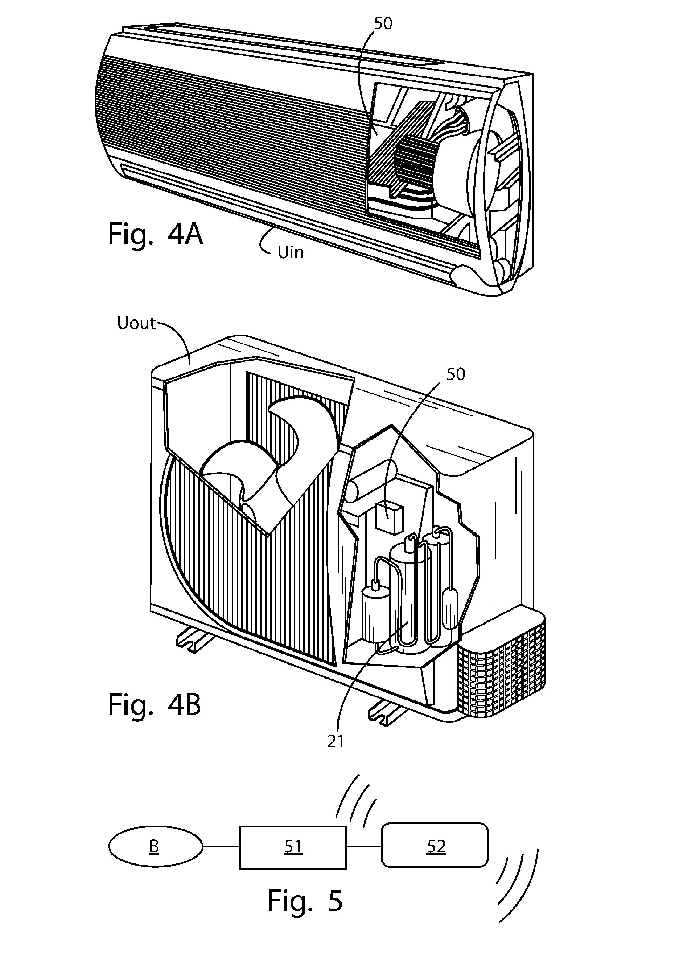

The third embodiment shown in figure 4 comprises a sanitization device according to the present invention, which has been applied to an air conditioning system 2 for closed environments, such as for example offices, rooms of a house, etc.

Said systems 2, as mentioned above, comprise at least one outer unit "Uₒᵤₜ" and at least one inner unit "Uᵢₙ" comprising an evaporator 24.

Sanitization devices 3 that can be applied to said systems 2 are, in principle, the same that have been described with reference to the two previous embodiments.

Said devices are able to perform a disinfection by means of nebulization or ozonation.

Said sanitization device 3, in the following explanatory and non-limiting embodiment, is applied to air conditioning system 2 and is arranged close to evaporator 24, so as to sanitize said evaporator 24 by means of sanitization substance "S".

Hence, said device 3 is fitted to a structure comprised in inner unit "Uᵢₙ".

Said sanitization device 3 is activated and handled by means of at least one control device 5, which, if necessary, communicates with central control device 50, which is comprised in air conditioning system 2, so as to be preferably activated at predetermined regular intervals.

As mentioned above, sanitization device 3 and the different devices comprised therein and described in the previous embodiments can be equally applied to air conditioning systems 2 which are arranged in rooms such as offices, house rooms, etc., keeping at the same time the technical features mentioned above unchanged.

## Claims

1. An air conditioning system (2) comprising:
• at least one piping circuit (20), inside which a predetermined gas flows;
• at least one compressor (21);
• at least one condenser (22);
• at least one pressure changing organ (23);
• at least one evaporator (24);
**characterized in that** is comprises at least one sanitization device (3), adapted to sanitize the air conditioning system (2) by means of at least one disinfectant substance (S) and is permanently built-in in the system (2) itself.

2. System according to claim 1, wherein the sanitization device (3) is arranged close to the evaporator (24).

3. System according to claim 1, wherein said sanitization device (3) is activated at regular intervals.

4. System according to claim 1, wherein said sanitization device (3) is an ultrasonic nebulizer.

5. System according to claim 4, wherein said sanitization device (3) comprises:
• at least one diffuser (31);
• at least one storing tank (4), adapted to hold the disinfectant substance (S);
• at least one nebulization container (42), adapted to contain at least one dose of disinfectant substance (S), which is sufficient to allow the nebulized disinfectant substance (S) to correctly spread on the entire surface of the evaporator (24);
• at least one level detecting device (40), adapted to signal the absence of said disinfectant substance (S);
• at least one feeding pipe (41), adapted to convey the disinfectant substance (S) from the storing tank (4) to the nebulization container (42);
• at least one regulating device (43), adapted to regulate the flow of the disinfectant substance (S) from the tank (4) to the nebulization container (42);
• at least one control device (5), adapted to control and handle the entire sanitization device (3);
• at least one outlet duct (32), which is shaped so that the combination of said duct (32) with the diffuser (31) creates a rain of drops of disinfectant substance (S) with reduced sizes, which is able to reach all the surfaces of the evaporator (24).

6. System according to claim 5, wherein the control device (5) comprises at least one power oscillator (51), adapted to generate a signal with a predetermined frequency, and at least one ultrasonic transducer (52), adapted to convert the signal of the oscillator (51) into a mechanical oscillation.

7. System according to claim 1, wherein the sanitization device (3) comprises an ozone generator or ozonizer and the disinfectant substance (S) is ozone.

8. System according to claim 7, wherein the ozonizer uses the crown effect for the generation of ozone.

9. System according to claim 8, wherein said sanitization device (3) comprises:
• at least one pipe (33), around which at least one coil (34) is wound;
• at least one control device (5), adapted to control and handle the entire sanitization device (3);
• at least one diffuser (31), adapted to contribute to the generation and the diffusion of the ozone gas.

10. System according to claim 8, wherein said sanitization device (3) comprises:
• at least one insulating plate (35), which is interposed between two electrodes;
• at least one control device (5), adapted to control and handle the entire sanitization device (3);
• at least one diffuser (31), adapted to contribute to the generation and the diffusion of the ozone gas.

11. System according to claim 9 or 10, wherein the control device (5) comprises at least one oscillator (51), adapted to generate a signal with a frequency in the band ranging from 11 kHz to 18 kHz.
